# EUROPEAN PATENT SPECIFICATION

(11) **EP 3 578 784 B1**
(45) Date of publication and mention of the grant of the patent: **13.11.2024**
(21) Application number: 19460028.4
(22) Date of filing: 31.05.2019
(51) Int. Cl.: F02D 19/06

(54) **PETROL/DIESEL AND LPG FUEL SUPPLY SYSTEM FOR INTERNAL COMBUSTION ENGINES**
BENZIN/DIESEL UND LPG KRAFSTOFFZUFÜHRSYSTEM FÜR BRENNKRAFTMASCHINEN
SYSTÈME D'ALIMENTATION D'ESSENCE/GAZOLE ET DE GPL POUR MOTEURS À COMBUSTION INTERNE

(30) Priority: 05.06.2018 PL 42582218
(43) Date of publication of application: 11.12.2019
(73) Proprietor: Certools Spólka Jawna Piotr Czekalski Krzysztof Hanke, 95-200 Pabianice (PL)
(72) Inventor: Czekalski, Pawel, 95-200 Pabianice (PL); Hanke, Krzysztof, 95-200 Pabianice (PL); Czekalski, Piotr, 95-200 Pabianice (PL)
(74) Representative: Dziubinska, Joanna

(56) References cited:
- WO-A1-2015/130182
- WO-A1-2018/047021
- DE-A1- 102007 051 677
- DE-U1- 20 209 413
- PL-B1- 222 798

## Description

The subject of the invention is a system of supplying combustion engines with fuel, alternately with petrol / diesel oil or LPG, especially engines with multi-point or direct injection.

The description of the Polish invention No. PL222798 presents a system supplying combustion engines with fuels such as petrol/diesel oil and interchangeably LPG. This system consists of a pump feeding fuel to the high pressure pump and a multivalve controlling the change of fuel in the supply system. In the LPG tank there is a pump, ahead of which a fuel type switch is placed, from this pump the fuel is fed to the high pressure pump. Downstream the high pressure pump, which feeds fuel directly to the engine, on the return pipe connecting the high pressure pump with the LPG tank, a return valve is located which receives signals from the sensors measuring the fuel pressure and temperature. In a situation when LPG is in the supply system, the correct pressure and temperature are maintained. When in the system there is petrol / diesel oil, these parameters change and it is necessary to switch on the damping nozzle and change the pump efficiency in the LPG tank. When switching from LPG supply to petrol / diesel oil, the flow opens to bypass the damping nozzle and the fuel system is quickly emptied from LPG (burn-out). When petrol reaches the high-pressure pump, pressure and temperature sensors give signals and the return valve closes the return line, thus shutting off the fuel supply to the LPG tank. When switching back to the LPG supply, the return valve opens and there is flow through the damping nozzle.

According to the invention system supplying combustion engines with fuel, alternately with petrol / diesel oil or LPG, with a high pressure pump supplying fuel to an engine, a low pressure pump supplying selected fuel to the high pressure pump, with a fuel type switch placed ahead of the low pressure pump, with valves controlling the operation of the fuel change system from petrol /diesel oil to LPG, wherein in the LPG tank in a sealed glass isolated from the LPG tank the low pressure pump is placed, which at the input is equipped with an electrovalve as a fuel change switch from petrol / diesel oil to LPG, to one input of the electrovalve there is supplied petrol / diesel oil through a solenoid valve, and to the second input LPG is supplied, wherein the low pressure branch at the outlet of the high pressure pump feeding the engine is connected to a manifold of a small and big fuel circuit, in which a small circuit valve is connected to the inlet of the low pressure pump in the sealed glass and a big circuit valve is connected to the LPG tank, where the petrol / diesel oil is supplied to the inlet of the sealed glass via the electrovalve, wherein the sealed glass is placed in the LPG tank via a cup, the sealed glass being an upper plate attached to a main plate of the cup, and wherein on the main plate of the cup on the LPG return line a non-return valve is mounted to block gas outflow from the LPG tank and on the LPG supply line to the low pressure pump a manual shut-off valve is installed.

WO 2018/047021 A1 discloses a dual fuel direct injection system for internal combustion engines, wherein inside a liquefied gas tank a fuel exchange set is fitted, consisting of an additional chamber with a low pressure pump fitted together in a pre-chamber connected by a non-return valve with the liquefied gas tank.

The system according to the invention as claimed herein makes it possible to quickly change the fuel supplying the engine, while protecting against mixing of fuels in the LPG tank, which will be explained in detail when describing an example of the system solution.

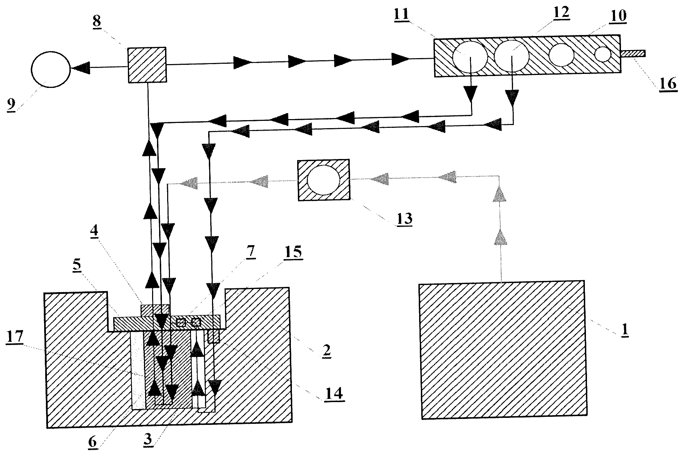

The system supplying the engines with fuel, alternately with petrol /diesel oil LPG, is shown in the drawing presenting its scheme.

As shown, in the supply system there is a petrol / diesel oil tank 1 and a LPG tank 2. A sealed glass 3 is placed in the LPG tank 2, which by its upper plate 4 is fixed in the upper plate 5 of the cup 6, placed in the LPG tank 2. At the inlet to the sealed glass 3 there is a solenoid valve 7, which controls the switching of fuel from petrol/diesel oil to LPG. To one input of the solenoid valve 7 there is supplied petrol / diesel oil through solenoid valve 13, and to the second input LPG is supplied - the electrovalve 7 opens the LPG flow instead of gasoline / diesel oil and vice versa. From the sealed glass 3 fuel: petrol / diesel or LPG is fed to the high pressure pump 8 and then to the engine 9. The low pressure branch at the outlet of the high pressure pump 8 is connected to the manifold 10 of the small and big fuel circuit. The small circuit valve 11 is connected to the inlet of the low pressure pump 17 in a sealed glass 3 and the big circuit valve 12 is connected to the LPG tank 2.

The operation of the system is as follows: when starting the supply system petrol / diesel is supplied to the inlet of the sealed glass 3, then the electrovalve 7 opens the petrol / diesel oil flow from the tank 1. From the sealed glass 3 petrol / diesel oil glass is supplied to the high pressure pump 8 and then to engine 9. In the manifold 10, the small circuit valve 11 is opened, petrol / diesel oil from the low pressure branch returns to the inside of the sealed glass 3 without mixing with LPG. When switching the system to LPG supply, the electrovalve 7 opens the LPG flow from the tank 2, petrol / diesel oil residues being in the small circuit flow into the sealed glass 3 and burn out in engine 9, in manifold 10 the small circuit valve 11 closes and the large circuit valve 12 opens and then LPG is fed to the supply system via the electrovalve 7. Returning to the petrol / diesel oil supply in the manifold 10 the big circuit valve 12 closes and the small circuit valve 11 opens, the electrovalve 7 closes the LPG supply and then petrol flows in a small circuit until the LPG is burned out in the system.

As you can see, the risk of mixing fuels in the LPG tank 2 is minimized and more precisely the dilution of LPG in LPG tank 2 by petrol or diesel oil.

In order to facilitate service work in the main plate 5 of cup 6, a non-return valve 14 is mounted in the LPG return pipe, which blocks the gas flow from the LPG tank 2, and a manual shut-off valve 15 is installed on the LPG supply line to the low pressure pump. In the manifold 10 of the big and small circuit a manual service valve 16 is installed.

## Claims

1. A system supplying combustion engines with fuel, alternately with petrol / diesel oil or LPG, with a high pressure pump (8) supplying fuel to an engine (9), a low pressure pump (17) supplying selected fuel to the high pressure pump (8), with a fuel type switch placed ahead of the low pressure pump (17), with valves (7, 11, 12, 13, 14) controlling the operation of the fuel change system from petrol /diesel oil to LPG, wherein in the LPG tank (2) in a sealed glass (3) isolated from the LPG tank (2) the low pressure pump (17) is placed, which at the input is equipped with an electrovalve (7) as a fuel change switch from petrol / diesel oil to LPG, to one input of the electrovalve (7) there is supplied petrol / diesel oil through a solenoid valve (13), and to the second input LPG is supplied, wherein the low pressure branch at the outlet of the high pressure pump (8) feeding the engine (9) is connected to a manifold (10) of a small and big fuel circuit, in which a small circuit valve (11) is connected to the inlet of the low pressure pump (17) in the sealed glass (3) and a big circuit valve (12) is connected to the LPG tank (2), where the petrol / diesel oil is supplied to the inlet of the sealed glass (3) via the electrovalve (7), wherein the sealed glass (3) is placed in the LPG tank (2) via a cup (6), the sealed glass (3) being an upper plate (4) attached to a main plate (5) of the cup (6, and wherein on the main plate (5) of the cup (6) on the LPG return line a non-return valve (14) is mounted to block gas outflow from the LPG tank and on the LPG supply line to the low pressure pump (17) a manual shut-off valve is installed (15).

## Patentansprüche

1. Ein System, das Verbrennungsmotoren mit Kraftstoff abwechselnd mit Benzin/Dieselöl oder Flüssiggas versorgt, wobei eine Hochdruckpumpe (8) Kraftstoff zum Motor (9) fördert und eine Niederdruckpumpe (17) den ausgewählten Kraftstoff der Hochdruckpumpe (8) zuführt, mit Kraftstofftypschalter vor der Niederdruckpumpe (17), mit Ventilen (7, 11, 12, 13, 14), die den Betrieb des Kraftstoffwechselsystems von Benzin/Diesel auf Flüssiggas steuern, wobei im Flüssiggastank (2) in einem isolierten Flüssiggastank (2) in einem dichten Glas (3) eine Niederdruckpumpe (17) untergebracht ist, die am Eingang ein Magnetventil (7) als Schalter für den Wechsel des Kraftstoffs von Benzin/Diesel auf LPG-Gas hat, einem Eingang des Magnetventils (7) wird Benzin/Dieselöl über das Magnetventil (13) und dem anderen Eingang LPG zugeführt, wobei am Ausgang die Hochdruckpumpe (8) zur Versorgung des Motors (9) mit dem Verteiler (10) des kleinen und großen Kraftstoffkreislaufs verbunden ist, in dem das Ventil des kleinen Kreislaufs (11) mit dem Einlass der Niederdruckpumpe (17) im dichten Glas (3) verbunden ist und das große Zirkulationsventil (12) mit dem LPG-Tank (2) verbunden ist, von wo aus Benzin/Diesel über das Magnetventil (7) zum Einlass des dichten Glases (3) geleitet wird, wo das dichte Glas (3) durch den Becher (6) in den LPG-Tank (2) eingesetzt wird, wobei das dichte Glas (3) die obere Platte (4) bildet, die an der Hauptplatte (5) des Bechers (6) befestigt ist, und bei dem auf der Hauptplatte (5) des Bechers (6) ein Rückschlagventil (14) in der LPG-Rücklaufleitung installiert ist, das den Gasaustritt aus dem LPG-Tank blockiert, und in der LPG-Versorgungsleitung an der Niederdruckpumpe (17) ein manuelles Absperrventil (15) installiert ist.

## Revendications

1. Système qui alimente les moteurs à combustion en carburant, alternativement avec de l'essence/diesel ou du gaz GPL, avec une pompe haute pression (8) alimentant en carburant le moteur (9), une pompe basse pression (17) alimentant le carburant sélectionné à la haute pression pompe (8), avec interrupteur de type de carburant situé devant la pompe basse pression (17), avec des vannes (7, 11, 12, 13, 14) commandant le fonctionnement du système de changement de carburant de l'essence/diesel au gaz GPL, où dans le réservoir de gaz GPL (2) dans un réservoir de gaz GPL isolé (2) est placé dans un verre étanche (3) avec une pompe basse pression (17), qui a une électrovanne (7) à l'entrée comme interrupteur pour changer le carburant de l'essence/huile par l'intermédiaire de l'électrovanne (13), et à la deuxième entrée GPL, et à la sortie la pompe haute pression (8) alimentant le moteur (9) est reliée au collecteur (10) du petit et grand circuit de carburant, dans lequel la vanne du petit circuit (11) est reliée à l'entrée de la pompe basse pression (17) dans un verre étanche (3) et la grande vanne de circulation (12) se connecte au réservoir de GPL (2), d'où l'essence/diesel est acheminé vers l'entrée du verre étanche (3) via l'électrovanne (7). , où le verre étanche (3) est placé dans le réservoir GPL (2) à travers la coupelle (6), le verre étanche (3) constituant la plaque supérieure (4) fixée à la plaque principale (5) de la coupelle ( 6) et dans lequel un clapet anti-retour (14) est monté sur la plaque principale (5) de la coupelle (6), sur le tuyau de retour de GPL, bloquant l'écoulement du gaz du réservoir de GPL et sur le tuyau d'alimentation en GPL à la vanne basse pression de la pompe (17), une vanne d'arrêt manuelle (15) est installée.
